# EUROPÄISCHE PATENTSCHRIFT

(11) **EP 0 718 521 B1**
(45) Veröffentlichungstag und Bekanntmachung des Hinweises auf die Patenterteilung: **22.03.2000**
(21) Anmeldenummer: 95115827.8
(22) Anmeldetag: 07.10.1995
(51) Int. Cl.: F16D 65/12, F16B 37/14

(54) **Bremsscheibe, insbesondere innenbelüftete Bremsscheibe**
Brake disc, in particular internally ventilated brake disc
Disque de frein, en particulier à ventilation interne

(30) Priorität: 22.12.1994 DE 4446017
(43) Veröffentlichungstag der Anmeldung: 26.06.1996
(73) Patentinhaber: Dr.Ing.h.c. F. Porsche Aktiengesellschaft, 70435 Stuttgart (DE)
(72) Erfinder: Martin, Roland, D-71287 Weissach (DE)

(56) Entgegenhaltungen:
- EP-A- 0 127 932
- EP-A- 0 476 158
- EP-A- 0 564 942
- US-A- 4 049 085
- BURCKHARDT: 'Fahrwerktechnik: Bremsdynamik und Pkw-Bremsanlagen', 1991, VOGEL, WÜRZBURG * Seite 286 - Seite 287 *

## Beschreibung

Die Erfindung bezieht sich auf eine Bremsscheibe, insbesondere innenbelüftete Bremsscheibe nach dem Oberbegriff des Anspruchs 1.

Aus der DE-AS 21 01 428 ist eine innenbelüftete Bremsscheibe mit Reibringen bekannt, die mit einem Bremsscheibentopf über Schrauben verbunden ist. Durch diese Zweiteiligkeit der Bremsscheibe wird eine thermische Ausdehnung besser aufgenommen und eine Verformung der Reibringe weitestgehend vermieden.

Aus BURCKHARDT: "Fahrwerktechnik: Bremsdynamik und Pkw-Bremsanlagen", 1991, Vogel-Verlag Würzburg, Seiten 286 bis 287 ist es darüber hinaus bekannt, einen Reibring mit einem Bremsentopf durch Hülsen und Schrauben zu verbinden, wobei die Schrauben in den Hülsen gehalten sind und flächig gegenüberstehende Befestigungsringe von Bremsentopf und Reibring zwischen dem Kopf der Schraube und einem Bund der Hülse gehalten sind.

Schließlich zeigt die EP 0 127 932 A1 eine zweigeteilte Bremsscheibe, bei der am Bremsentopf Stehbolzen und korrespondierend hierzu innenseits des Bremsringes radial verlaufende Schlitze vorgesehen sind. Zur Aufnahme der Stehbolzen in den Schlitzen sind Abstandselemente vorgesehen, die auf die Stehbolzen aufgeschoben sind. Zur nachgiebigen axialen Lagerung des Bremsringes können elastische Druckscheiben vorgesehen sein, die ebenfalls auf den Stehbolzen angeordnet sind.

Aufgabe der Erfindung dagegen ist es, eine Bremsscheibe zu schaffen, durch deren zweiteiligen Aufbau und der Verbindungsart der beiden Bremsscheibenbauteile ein Bremsenquietschen vermieden bzw. weitestgehend abgebaut wird.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß der Bremsscheibentopf von den Reibringen der Bremsscheibe getrennt ist und eine Verbindung mittels Hülsen und darin festsetzbaren Schrauben erfolgt. Durch dicht gegenüberstehende, relativ große Kontaktflächen des Bremsentopfes und des einen Reibringes der Bremsscheibe können Schwingungen, insbesondere Axialschwingungen der Bremsscheibe und somit ein Bremsenquietschen weitestgehend abgebaut werden.

Es werden möglichst viele reibende Flächen zwischen dem Bremsentopf und der Bremsscheibe gebildet, wie beispielsweise mittels der Hülse und durch die Absetzung des einen Befestigungsringes am Bremsentopf. Weitere schwingungsdämpfende Maßnahmen bestehen in einer dämpfenden Zwischenschicht auf den Kontaktflächen des Bremsentopfes und des einen Reibringes. Auch kann die Hülse mit einer solchen Schicht versehen sein.

Zum Vermindern bzw. Abbau von Schwingungen kann auch nach einer weiteren Ausführung der Befestigung zwischen Bremsentopf und Bremsscheibe die Hülse im Bereich des Schraubenkopfes überstehend ausgebildet sein und zwischen dem Schraubenkopf und dem Befestigungsring des Reibringes eine Tellerfeder angeordnet werden. Hierdurch ist mittels der federnden Wirkung ein Schwingungsabbau an der Bremsscheibe möglich.

Die Zweiteiligkeit der Bremsscheibeneinheit aus Bremsentopf und Bremsscheibe ermöglicht die Verwendung von günstigen Werkstoffpaarungen, die zusätzlich zum Abbau von Schwingungen an der Bremsscheibe beitragen und somit auch ein Bremsenquietschen unterbunden wird.

Ausführungsbeispiele der Erfindung sind in der Zeichnung dargestellt und werden im folgenden näher beschrieben.

Es zeigen
- Fig. 1: eine Ansicht einer Bremsscheibe mit verbundenem Bremsentopf, teilweise im Schnitt und
- Fig. 2: eine Darstellung einer Verbindung von Bremsentopf und Bremsscheibe unter Zwischenschaltung einer Tellerfeder.

Die Bremsscheibe 1 einer Scheibenbremse umfaßt zwei Reibringe 2, 3, die innenbelüftet sind und über Befestigungsschrauben 4 mit einem Bremsentopf 5 verbunden sind. Die Verbindung des Bremsentopfes 5 mit der Bremsscheibe 1 erfolgt über Befestigungsringe 6, 7, die sich gegenüberstehen und miteinander korrespondierende Bohrungen 8, 9 aufweisen, in denen eine Hülse 10 eingesteckt ist. Diese ist mit einem Gewinde 11 versehen, in das die Befestigungsschraube 4 einsetzbar ist. Das Gewinde 11 ist selbsthemmend ausgeführt.

Die Hülse 10 weist an einem Ende einen Bund 12 auf, der sich außenseitig des Befestigungsringes 7 des Bremsentopfes 5 abstützt. Gegenüberstehend des Bundes 12 an der Außenfläche des Befestigungsringes 6 der Bremsscheibe 1 stützt sich der Kopf 13 der Befestigungsschraube 4 ab.

Der Bund 12 weist zur Wand 14 des Bremsentopfes 5 hin eine Abflachung 15 auf und bildet hierdurch eine Verdrehsicherung.

Zur großflächigen Aufnahme des Befestigungsringes der Bremsscheibe 1 weist der Bremsentopf 5 eine Absetzung 16 auf, in welche der Befestigungsring 6 des Reibringes 2 zur Anlage kommt.

Die Kontaktflächen der Befestigungsringe 6, 7 sollen eine möglichst große reibende Fläche ergeben und können zusätzlich mit einer dämpfenden Zwischenschicht aus einem Kunststoff oder dgl. Material versehen sein. Des weiteren kann auch die Hülse 10 mit einem derartigen Material umhüllt werden.

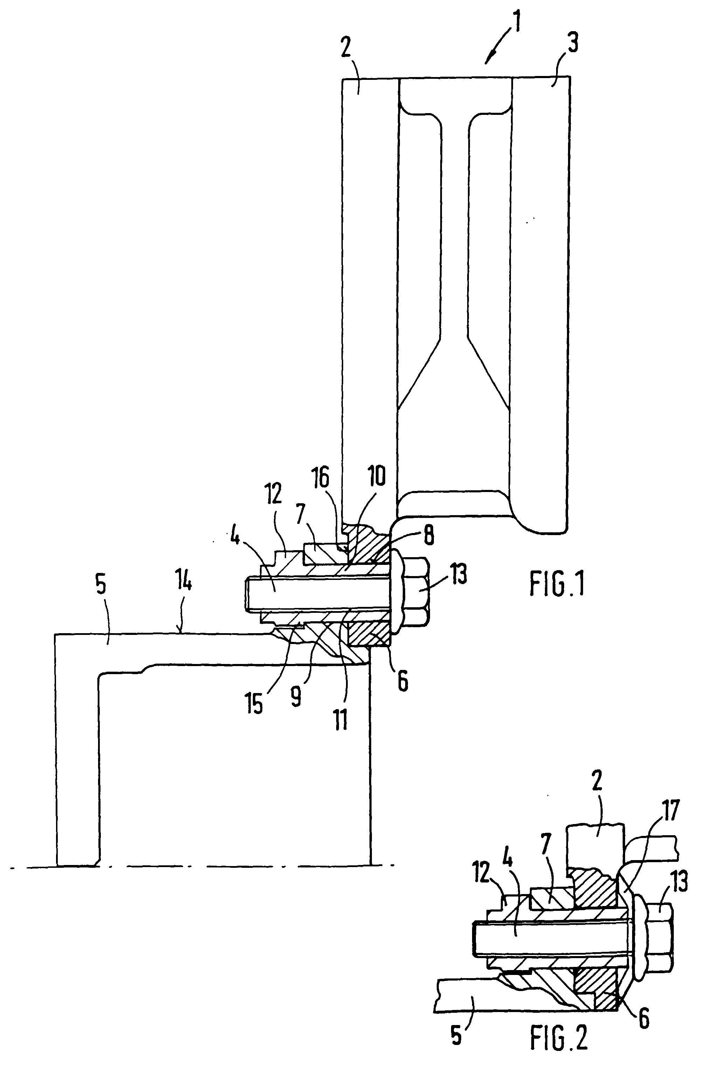

Nach einer weiteren Ausführung gem. Fig. 2 ist die Befestigungsschraube 4 mit einer Tellerfeder 17 versehen, die zwischen dem Kopf 13 und der Außenfläche des Befestigungsringes 6 der Bremsscheibe 1 bzw. dem Reibring 2 angeordnet ist. In diesem Fall ist die Hülse 10 geringfügig zur Außenfläche vorstehend.

Durch die Verbindung der Bauteile 2, 3 und 5 der Bremsscheibe 1 über die Schrauben 4 kann der Werkstoff der Bauteile entsprechend den Anforderungen gewählt werden, wobei sich eine Paarung aus Graugußteilen zur Vermeidung eines Bremsenquietschens als vorteilig erwiesen hat.

## Patentansprüche

1. Bremsscheibe, insbesondere innenbelüftete Bremsscheibe mit mindestens einem Reibring (2), der über Befestigungsschrauben (4) mit einem Bremsentopf (5) verbunden ist, wobei die Befestigungsschrauben in Hülsen (10) von Durchgangsbohrungen (8, 9) in flächig gegenüberstehenden Befestigungsringen des Bremsentopfes und des Reibringes der Bremsscheibe (1) mittels eines Gewindes (11) gehalten sind, wobei einerseits ein Kopf (13) der Befestigungsschraube (4) und andererseits ein gegenüberstehender Bund (12) der Hülse (10) sich an der Außenfläche der zu verbindenden Teile (5 und 2) abstützen, **dadurch gekennzeichnet,** daß die Hülse (10) mit einer schwingungsdämpfenden Schicht versehen ist.

2. Bremsscheibe nach Anspruch 1, **dadurch gekennzeichnet,** daß der Bund (12) der Hülse (10) innenseitig des Befestigungsringes (7) des Bremsentopfes (5) angeordnet ist und eine Abflachung (15) aufweist, die sich an einer Außenwand (14) des Bremsentopfes (4) anlegt.

3. Bremsscheibe nach den Ansprüchen 1 oder 2, **dadurch gekennzeichnet,** daß der Befestigungsring (7) des Bremsentopfes (5) eine, eine Kontaktfläche bildende Absetzung (16) aufweist, in der der Befestigungsring (6) des Reibringes (2) der Bremsscheibe (1) angeordnet ist.

4. Bremsscheibe nach Anspruch 1 oder einem der vorhergehenden Ansprüche, **dadurch gekennzeichnet,** daß die Hülse (10) an ihrem, dem Schraubenkopf (13) zugerichteten Ende gegenüber der Außenfläche des Befestigungsringes (6) des Reibringes (2) überstehend ist und zwischen dem Schraubenkopf (13) und dem Hülsenende mindestens eine Tellerfeder (17) angeordnet ist.

5. Bremsscheibe nach Anspruch 1 oder einem der vorhergehenden Ansprüche, **dadurch gekennzeichnet,** daß zwischen den Kontaktflächen des Befestigungsringes (7) des Bremsscheibentopfes (5) und dem Befestigungsring (6) des Reibringes (2) eine Schicht aus einem schwingungsdämpfenden Material angeordnet ist.

6. Bremsscheibe nach Anspruch 1 oder einem der vorhergehenden Ansprüche, **dadurch gekennzeichnet,** daß der Bremsscheibentopf (5) und die Reibringe (2, 3) aus einem Gußmaterial bestehen.

## Claims

1. A brake disc, in particular an internally ventilated brake disc with at least one friction ring (2) connected to a brake chamber (5) by way of fastening bolts (4), wherein the fastening bolts are held in sleeves (10) of through bores (8, 9) in fastening rings - opposed in a planar manner - of the brake chamber and of the friction ring of the brake disc (1) by means of a thread (11), wherein a head (13) of the fastening bolt (4) on the one hand and an opposite collar (12) of the sleeve (10) on the other hand are supported on the outer face of the parts (5 and 2) to be connected, **characterized in that** the sleeve (10) is provided with a vibration-damping layer.

2. A brake disc according to Claim 1, **characterized in that** the collar (12) of the sleeve (10) is arranged on the inside of the fastening ring (7) of the brake chamber (5) and has a flattening (15) which rests against an outer wall (14) of the brake cup (5).

3. A brake disc according to Claim 1 or 2, **characterized in that** the fastening ring (7) of the brake chamber (5) is provided with an offset portion (16) which forms a contact face and in which the fastening ring (6) of the friction ring (2) of the brake disc (1) is arranged.

4. A brake disc according to Claim 1 or one of the preceding Claims, **characterized in that** the sleeve (10) projects at its end facing the bolt head (13) with respect to the outer face of the fastening ring (6) of the friction ring (2), and at least one cup spring (17) is arranged between the bolt head (13) and the end of the sleeve.

5. A brake disc according to Claim 1 or one of the preceding Claims, **characterized in that** a layer of a vibration-damping material is arranged between the contact faces of the fastening ring (7) of the brake-disc chamber (5) and the fastening ring (6) of the friction ring (2).

6. A brake disc according to Claim 1 or one of the preceding Claims, **characterized in that** the brake-disc chamber (5) and the friction rings (2, 3) consist of a cast material.

## Revendications

1. Disque de frein, notamment disque de frein ventilé de l'intérieur avec au moins un anneau de friction (2), qui est relié à un pot de frein (5), par des vis de fixation (4), les vis de fixation étant maintenue dans des douilles (10) de trous traversants (8, 9) dans des bagues de fixation se faisant face à plat du pot de frein et de l'anneau de friction du disque de frein (1), au moyen d'une tige filetée (11), une tête (13) de la vis de fixation (4) d'une part et un épaulement (12) opposé de la douille (10) d'autre part prenant appui contre la surface extérieure des éléments (5 et 2) à relier, caractérisé en ce que la douille (10) est pourvue d'un revêtement qui amortit les oscillations.

2. Disque de frein selon la revendication 1, caractérisé en ce que l'épaulement (12) de la douille (10) est disposé sur le côté intérieur de la bague de fixation (7) du pot de frein (5) et présente une partie aplatie (15), qui s'applique contre une paroi extérieure (14) du pot de frein (4).

3. Disque de frein selon les revendications 1 ou 2, caractérisé en ce que la bague de fixation (7) du pot de frein (5) présente un étagement (16) qui forme une surface de contact et dans laquelle est disposée la bague de fixation (6) de l'anneau de friction (2) du disque de frein (1).

4. Disque de frein selon la revendication 1 ou l'une des revendications précédentes, caractérisé en ce que la douille (10) dépasse à son extrémité orientée vers la tête de vis (13), par rapport à la surface extérieure de la bague de fixation (10) de l'anneau de friction (2) et en ce qu'au moins un ressort Belleville (17) est placé entre la tête de vis (13) et l'extrémité de la douille.

5. Disque de frein selon la revendication 1 ou l'une des revendications précédentes, caractérisé en ce qu'une couche faite d'une matière amortissant les oscillations est disposée entre les surfaces de contact de la bague de fixation (7) du pot de disque de frein (5) et la bague de fixation (6) de l'anneau de friction (2).

6. Disque de frein selon la revendication 1 ou l'une des revendications précédentes, caractérisé en ce que le pot de disque de frein (5) et les anneaux de friction (2, 3) sont en fonte.
